# EUROPEAN PATENT APPLICATION

(11) **EP 4 390 157 A1**
(43) Date of publication of application: **26.06.2024**
(21) Application number: 23218519.9
(22) Date of filing: 20.12.2023
(51) Int. Cl.: F16B 25/00, F16B 25/10, F16B 35/06

(54) **SCREW**

(30) Priority: 22.12.2022 EP 22216153
(71) Applicant: Illinois Tool Works Inc., Glenview IL 60025 (US)
(72) Inventor: FRIIS, Morten, Glenview, 60025 (US)
(74) Representative: HGF

(57) **Abstract**

A screw, comprising a head and a tip at opposite ends, and a shank extending between the head and the tip, the head comprising: a top portion, and a frustoconical portion arranged between the top portion and the shank, wherein the frustoconical portion comprises a step defining an annular recess towards the shank; and at least one radial rib arranged in the recess and extending towards the shank.

## Description

The present invention relates to a screw.

### BACKGROUND

Fasteners may be used to fasten two or more parts together. For example, a fastener may be used to fasten a metal bracket to a wooden part, or to fasten two metal parts together, or two wooden parts together.

One example of a fastener is a screw. Screws have been known and available for many years, and are generally made of metal and include a shank having a head at one end, and a tip at an opposite end to the head.

One known problem with existing screws is that once inserted into the two or more parts to hold them together, they can become loosened due to vibrations, frequent use, or corrosion (e.g. weathering), for example, which negatively affects the fixation of the parts. Another known problem with existing screws is low pull-out resistance, which causes instability, breakage, damage and collapse of structures under load.

The present invention aims to overcome these disadvantages. In particular, it is an object of the present invention to provide a screw with improved pull-out resistance, in order to provide improved fixation. It is another object of the present invention to provide a screw that is less susceptible to loosening once inserted.

### SUMMARY OF THE INVENTION

The invention is defined in the appended claims.

According to an aspect, there is provided a screw, comprising a head and a tip at opposite ends, and a shank extending between the head and the tip, the head comprising: a top portion, and a frustoconical portion arranged between the top portion and the shank, wherein the frustoconical portion comprises a step defining an annular recess towards the shank; and at least one radial rib arranged in the recess and extending towards the shank.

By providing at least one radial rib that is arranged within an annular recess defined by a step of a frustoconical portion, the rib(s) engage with the part to be fixated, which improves pull-out resistance and therefore provides improved fixation. Even when the part vibrates, corrodes, or is otherwise moved, the head of the screw remains fixed to the part via the rib(s), improving contact between the screw and the part to be fixated. This allows the screw to be more firmly held during use, making the screw less susceptible to loosening. Another advantage of having at least one radial rib extending towards the shank and arranged within the recess defined by a step in the frustoconical portion is that the frustoconical portion shields the radial rib(s) from milling the part to be fixated upon insertion and rotation of the screw.

In examples, the frustoconical portion comprises a circumferential surface facing the shank and the tip. In examples, the circumferential surface is arranged substantially perpendicular to an axis of the screw.

In examples, step segments the frustoconical portion into a first frustoconical part extending from the top portion to the step, and a second frustoconical part extending from the step towards the shank. In examples, a diameter of the first frustoconical part is greater than a diameter of the second frustoconical part.

In examples, the head of the screw comprises a plurality of ribs evenly distributed around the head. This is particularly advantageous because the ribs uniformly contact the part to be fixated and there is provided multiple points of contact between the screw and the part.

In examples, the, or each, rib has a radial dimension that decreases towards the shank.

In examples, the, or each, rib comprises an axial edge, the, or each, rib being symmetrical with respect to an axial plane containing the axial edge.

In examples, the shank comprises a first portion having a first thread, and a second portion between the first portion and the tip, the second portion having a second thread. In examples, the first thread and the second thread are orientated in opposing turning directions.

In examples, the second thread has a thread angle that is larger than a thread angle of the first thread.

In examples, the shank comprises a thread comprising a first part, and a second part arranged between the first part and the tip.

In examples, a thread angle of the thread increases continuously from the first part to the second part.

In other examples, a thread angle of the thread is constant along the first part and/or the second part.

In examples, a length of the second part is at least twice the diameter of the shank. In examples, the length of the second part is between two and four times the diameter of the shank.

According to another aspect, there is provided a screw, comprising a head and a tip at opposite ends, and a shank extending between the head and the tip, wherein the shank comprises at least one drilling thread configured for cutting into wood.

In examples, a diameter of the at least one drilling thread is substantially equal to a diameter of the shank.

According to a further aspect, there is provided a screw, comprising a head and a tip at opposite ends, and a shank extending between the head and the tip, wherein the shank comprises a main screw thread, and the tip comprises a drilling thread configured for cutting into wood.

In examples, the main screw thread extends towards the tip. In examples, the main screw thread extends along the tip. In examples, the main screw thread partially extends along the tip. In other examples, the main screw thread extends along the entire tip.

In examples, the at least one drilling thread has a pitch that is greater than a pitch of the main screw thread.

In examples, an external diameter of the at least one drilling thread is smaller than an externa diameter of the main screw thread.

In other examples, an external diameter of the at least one drilling thread is substantially equal to the diameter of the shank. In examples, an external diameter of the at least one drilling thread is equal to the diameter of the shank with a tolerance t. In examples, the tolerance t may be of +0.0 to +0.5mm, preferably +0.0 to +0.2mm.

In examples, the tip comprises a plurality of drilling threads. In examples, the plurality of drilling threads are regularly distributed around the tip. This advantageously provides multiple points of cutting.

In examples, the head comprises: a top portion, and a frustoconical portion arranged between the top portion and the shank, wherein the frustoconical portion comprises a step defining an annular recess towards the shank; and at least one radial rib arranged in the recess and extending towards the shank.

By providing at least one radial rib that is arranged within an annular recess defined by a step of a frustoconical portion, the rib(s) engage with the part to be fixated, which improves pull-out resistance and therefore provides improved fixation. Even when the part vibrates, corrodes, or is otherwise moved, the head of the screw remains fixed to the part via the rib(s), improving contact between the screw and the part to be fixated. This allows the screw to be more firmly held during use, making the screw less susceptible to loosening. Another advantage of having at least one radial rib extending towards the shank and arranged within the recess defined by a step in the frustoconical portion is that the frustoconical portion shields the radial rib(s) from milling the part to be fixated upon insertion and rotation of the screw

In examples, the frustoconical portion comprises a circumferential surface facing the shank and the tip.

In examples, the circumferential surface is arranged substantially perpendicular to an axis of the screw.

In examples, the step segments the frustoconical portion into a first frustoconical part extending from the top portion to the step, and a second frustoconical part extending from the step towards the shank.

In examples, a diameter of the first frustoconical part is greater than a diameter of the second frustoconical part.

In examples, the head of the screw comprises a plurality of ribs evenly distributed around the head. The provision of a plurality of ribs further increases pull-out resistance and improve fixation.

In examples, the, or each, rib has a radial dimension that decreases towards the shank.

In examples, the, or each, rib comprises an axial edge, the, or each, rib being symmetrical with respect to an axial plane containing the axial edge.

In other examples, the, or each, rib is asymmetrical with respect to an axial plane containing the axial edge.

In examples, the shank comprises a first portion having a first thread, and a second portion between the first portion and the tip, the second portion having a second thread. In examples, the first thread and the second thread are orientated in opposing turning directions.

In examples, the second thread has a thread angle that is larger than a thread angle of the first thread.

In examples, the thread of the shank comprises a first part, and a second part arranged between the first part and he tip.

In examples, a thread angle of the thread increases continuously from the first part to the second part.

In other examples, a thread angle of the thread is constant along the first part and/or the second part.

In examples, a length of the second part and the tip is at least twice the diameter of the shank. In examples, a length of the second part and the tip is between two and four times the diameter of the shank.

In examples, a combined length of the second part and the tip is at least twice the diameter of the shank. In examples, a combined length of the second part and the tip is between two and four times the diameter of the shank.

According to another aspect, there is provided a screw, comprising a head and a tip at opposite ends, and a shank extending between the head and the tip, wherein the shank comprises a thread comprising a first part, and a second part arranged between the first part and the tip, wherein a thread angle of the second part is greater than a thread angle of the first part.

In examples, the thread angle of the second part is between 5 and 15 degrees greater than the thread angle of the first part. In examples, the thread angle of the second part is 10 degrees greater than the thread angle of the first part.

According to a further aspect, there is provided a screw, comprising a head and a tip at opposite ends, and a shank extending between the head and the tip, wherein the shank comprises a thread comprising a first part, and a second part arranged between the first part and the tip, wherein a length of the second part and the tip is at least twice the diameter of the shank. In examples, the combined length of the second part and the tip is at least twice the diameter of the shank.

In examples, the length of the second part and the tip is between two and four times the diameter of the shank. In examples, the combined length of the second part and the tip is between two and four times the diameter of the shank.

In examples, the screw is a wood screw.

In examples, the screw has a head and a shank axially prolonging the head until a free end or tip.

In examples, the head has a top portion. The top portion may be substantially cylindrical. The top portion may have a top surface. The top surface may be flat, or raised (e.g., oval). The top surface may have a tool socket.

In examples, the head has a substantially frustoconical or tulip-shape portion arranged between the top portion and the shank. The diameter of the frustoconical portion may decrease from the top portion to the shank.

In examples, the frustoconical portion has a step or shoulder defining an annular recess towards the shank and/or a circumferential surface facing the shank and the tip. The surface may be substantially perpendicular to the axis of the screw. The surface may be substantially flat. The step may divide the frustoconical portion into a first frustoconical part and a second frustoconical part. The first frustoconical part may extend from the top portion to the step. The second frustoconical part may extend from the step towards the shank. The frustoconical portion may have a greater diameter between the step and the top portion (at the first frustoconical part) than between the step and the shank (at the second frustoconical part).

In examples, the head has at least one rib. The rib(s) may be radial. The rib(s) may be oriented axially. The rib(s) may be regularly distributed around the head. The rib(s) may be in the annular recess. The rib(s) may extend from the surface towards the shank. A radial dimension of the rib(s) may decrease from the surface towards the shank. The rib(s) may have a substantially pyramidal shape. The rib(s) may have an axial edge. The rib(s) may be asymmetrical with respect to an axial plane containing their axial edge. The axial edge may be common to a first face oriented towards a first direction of rotation and an opposite second face. The second face may be larger than the first face. The first direction of rotation may be to the left, when the screw is viewed with the head up. The maximum diameter of the rib(s) may be substantially equal to the maximal diameter of the head at the step.

In examples, the head has at least one axial notch. The notch(es) may be U-shaped. The notch(es) may extend at least partially along the top portion and/or along the frustoconical portion. The notch(es) may extend along the first frustoconical part. The notch(es) may be axially aligned with the rib(s) . The notch(es) may be made for air and/or oil passage when realizing the rib(s).

In examples, the shank has a first portion. The first portion may have a first thread. The first thread may turn right towards the tip, when the screw is viewed with the head up.

In examples, the shank has a second portion. The second portion may be between the first portion and the tip.

In examples, the second portion has a second thread. The second thread may turn left towards the tip, when the screw is viewed with the head up. The second thread may continue along the tip. The second thread may have a thread angle α that is larger at a first part of the second thread than at a second part of the second thread. The second part may be closer to the tip than the first part. The thread angle α may be constant along the first part. The thread angle α may be constant along the second part. The thread angle α may increase from the first part to the second part. The thread angle α may continuously and regularly increase from the first part to the second part. The thread angle α may increase by approximatively 10° from the first part to the second part. The thread angle α may be equal at the second part and at the tip. The length L of the second part and the tip along the axis of the screw may be equal to at least twice the diameter of the second portion (i.e. shank). The length L may be equal to two to four times the diameter of the second portion.

In examples, the second thread has axial notches or cuts at an area close to the tip. The notches may be V-shaped. The notches may be regularly distributed around the second portion. The notches may define spikes or peaks or teeth along the second thread. The notches may be axially aligned.

In examples, the shank has a third portion. The third portion may be between the head and the first portion. The third portion may have no thread.

In examples, the tip has at least one drilling or cutting thread. The drilling threads may be regularly distributed around the tip. The drilling threads may be completely or almost completely located at the tip. The drilling threads may turn left away from the shank, when the screw is viewed with the head up. The pitch of the drilling threads may be greater than the pitch of the second thread. The external diameter of the drilling threads may be inferior to the external diameter of the second thread. The drilling threads may have a diameter which is substantially equal to the diameter of the second portion. The diameter of the drilling threads may be equal to the diameter of the second portion with a tolerance t. The tolerance t may be of +0.0 to +0.5mm, preferably +0.0 to +0.2mm. The tip may be pointed.

In examples, the screw is used for fastening wooden parts together. The screw may also, or alternatively, be used for fastening a metal bracket having a hole designed to receive a countersunk screw, for example a 90° countersunk screw, to wooden part(s), the head of the screw being received in said hole.

### BRIEF DESCRIPTION OF THE DRAWINGS

Embodiments of the invention are now described, by way of example only, hereinafter with reference to the accompanying drawings.
FIG. 1 illustrates a perspective view of a screw.
FIG. 2 illustrates an enlarged perspective view of a screw head.
FIG. 3 illustrates a profile side view of the screw head.
FIG. 4 illustrates a profile side view of a screw tip.
FIG. 5 illustrates the screw viewed from the tip.
FIG. 6 illustrates an enlarged perspective view of a first portion of the screw.
FIG. 7 illustrates an enlarged perspective view of the screw head.
FIG. 8 illustrates a partial section view of a second portion of the screw, and a detail view of first and second thread parts.
FIG. 9 illustrates an enlarged perspective view of the screw tip.
FIG. 10 illustrates an application of the screw to assemble two parts together.
FIG. 11 illustrates a perspective view of another screw head.
FIG. 12 illustrates a profile side view of the screw head, viewed from a first side.
FIG. 13 illustrates a profile side view of the screw head, viewed from a second side.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', `inwardly', `outer' and 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second" and "third" etc. merely indicate that different instances of like objects are being referred to and are not intended to imply that the objects so described must be in a given sequence, either temporally, spatially, in ranking or in any other manner.

Like reference numerals are used to depict like features throughout.

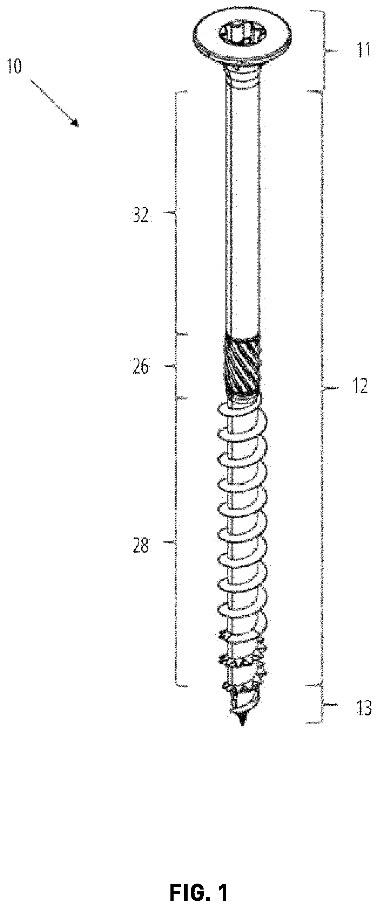

FIG. 1 shows a perspective view of a screw 10. In this example, the screw 10 is a wood screw. The screw 10 has a head 11 and a tip 13 at opposite ends, and a shank 12 extending between the head 11 and the tip 13. The shank 12 includes a main screw thread 29. In this example, the main screw thread 29 extends along the tip 13. The tip 13 includes at least one drilling thread 33. The at least one drilling thread 33 may be configured for cutting into wood. The shank 12 axially prolongs the head until it reaches the tip 13 at a free end. The shank 12 in this example has three portions: a first portion 26 at a central region in the shank 12; a second portion 28 between the first portion 26 and the tip 13; and a third portion 32 between the head 11 and the first portion 26 and having no thread. Although in this example the shank 12 has three portions, it is envisaged that the shank 12 may instead include a single portion having the main screw thread 29. For example, the shank 12 may be provided with a main screw thread 29 (e.g. at the second portion 28), without the first portion 26 and without the third portion 32. The main screw thread 29 may extend the entire length of the shank 12. In other examples, the main screw thread 29 may extend only partially along the length of the shank 12. The main screw thread 29 may extend towards the tip. In examples, the main screw thread extends along the tip. In examples, the main screw thread partially extends along the tip. In other examples, the main screw thread extends along the entire tip.

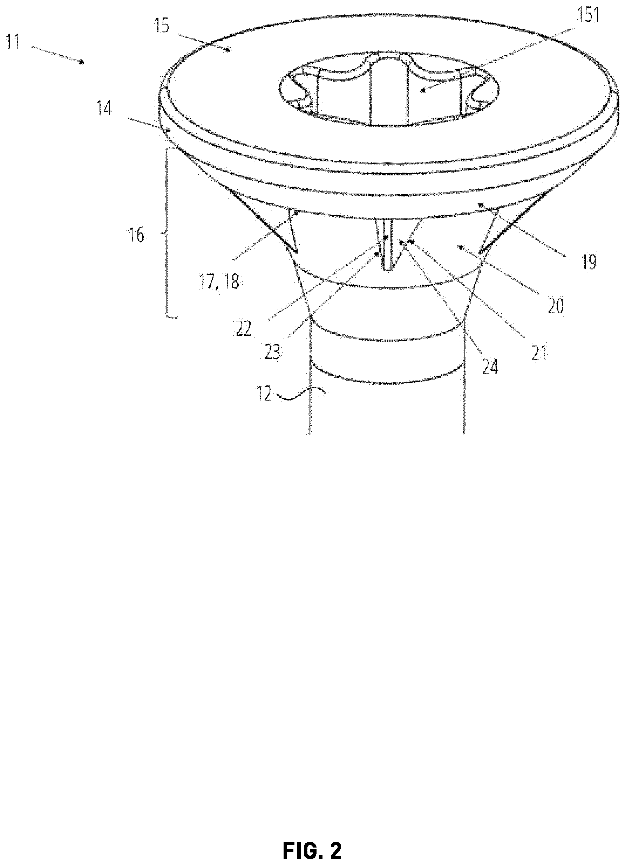

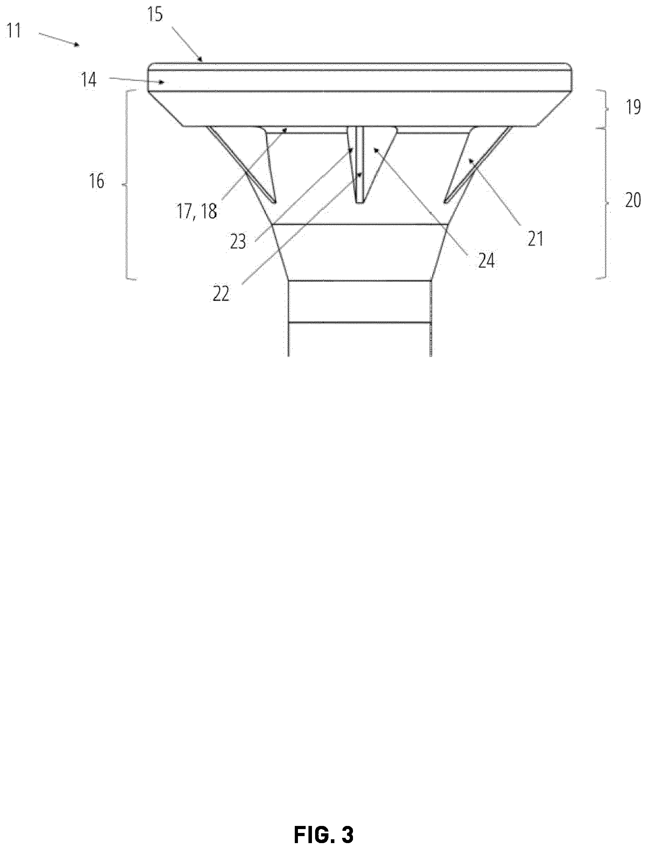

FIG. 2 and FIG. 3 show an enlarged view of the head 11. The head 11 includes a top portion 14, which is substantially cylindrical in this example. The top portion 14 is provided with a top surface 15. The top surface 15 is flat in this example, although it is envisaged that in other examples the top surface 15 may be raised. The top surface 15 of the head 11 is provided with a tool socket 151 which is shaped and configured for the insertion of a tool (not shown).

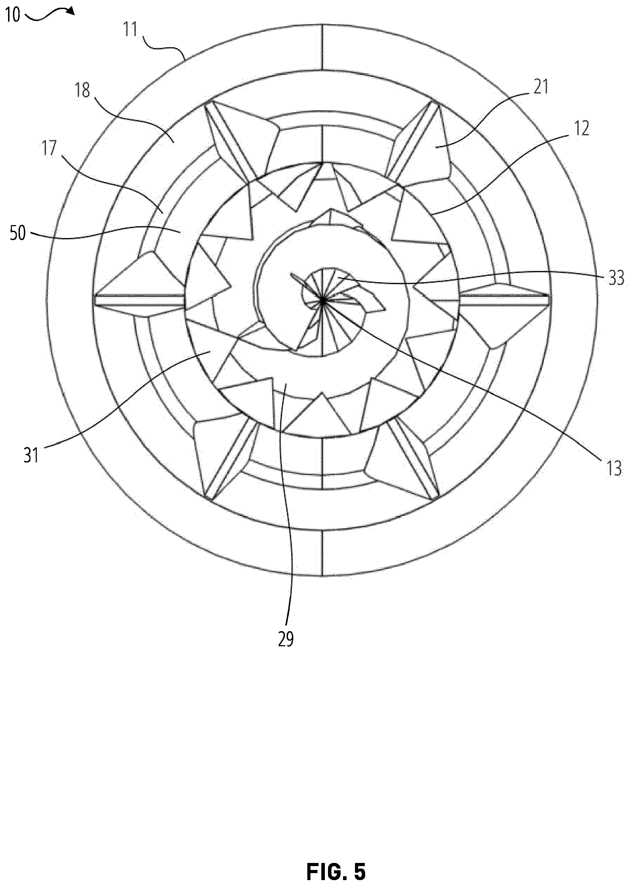

The head 11 has a substantially frustoconical portion 16 (i.e. tulip-shaped portion) arranged between the top portion 14 and the shank 12. The diameter of the frustoconical portion 16 decreases from the top portion 14 towards the shank 12. The frustoconical portion 16 is provided with a step 17 (i.e. shoulder) that defines an annular recess (50, FIG. 5) towards the shank 12. In this example, the frustoconical portion 16 includes a circumferential surface 18 that faces the shank 12 and the tip 13. The circumferential surface 18 is substantially perpendicular to the axis of the screw 10, and is a substantially flat surface.

The step 17 of the frustoconical portion 16 divides the frustoconical portion 16 into a first frustoconical part 19 and a second frustoconical part 20. The first frustoconical part 19 extends from the top portion 14 to the step 17, while the second frustoconical part 20 extends from the step 17 towards the shank 12. The diameter at the first frustoconical part 19 is greater than the diameter at the second frustoconical part 20.

The head 11 includes at least one radial rib 21. In this example, the head 11 is provided with six radial ribs 21, although only three ribs 21 are illustrated in the view of FIG. 2. The ribs 21 are oriented axially, and are regularly distributed around the head 11. The ribs 21 are located within the annular recess (50, FIG. 5). In this example, the ribs 21 extend from the circumferential surface 18 towards the shank 12. A radial dimension of the ribs 21 decreases from the surface 18 towards the shank 12, such that the ribs 21 have a substantially pyramidal shape. The ribs 21 are provided with an axial edge 22. In this example, the ribs 21 are arranged asymmetrically with respect to an axial plane containing the axial edge 22. The axial edge 22 in this example is common to a first face 23 oriented towards a first direction of rotation and an opposite second face 24. The first direction of rotation may be to the left, when the screw 10 is viewed with the head 11 up. The second face 24 is larger than the first face 23. The maximum diameter of the ribs 21 is substantially equal to the maximum diameter of the head 11 at the step 17.

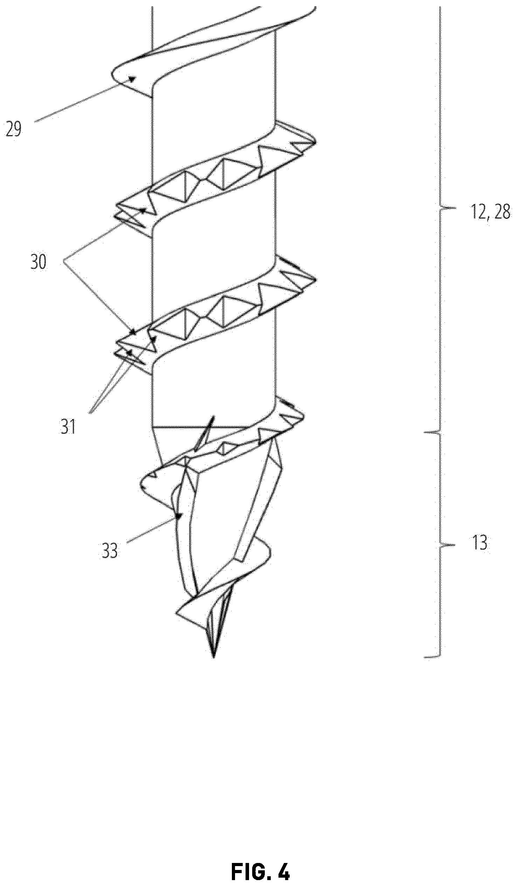

FIG. 4 shows the tip 13 end of the screw 10, which illustrates a second thread 29 (i.e. main screw thread) of the second portion 28. The second thread 29 turns left towards the tip 13, when the screw 10 is viewed with the head 11 up. The second thread 29 continues along the tip 13. The second thread 29 includes axial notches 30 (i.e. cuts) at an area close to the tip 13. The notches 30 are V-shaped in this example. The notches 30 are regularly distributed around the second portion 28. The notches 30 define teeth 31 (e.g. spikes or peaks) along the second thread 29. In this example, the notches 30 are axially aligned.

The tip 13 is pointed and includes at least one drilling thread 33 (i.e. cutting thread). In this example, the tip 13 includes a plurality of drilling threads 33 that are regularly distributed around the tip 13. The drilling threads 33 are located either completely or almost completed at the tip 13. The drilling threads 33 are arranged to turn left away from the shank 12, when the screw 10 is viewed with the head 11 up.

As illustrated, the pitch of the drilling threads 33 are greater than the pitch of the second thread 29. The external diameter of the drilling threads 33 are smaller in comparison to the external diameter of the second threads 29. For example, the diameter of the drilling threads is equal to the diameter of the second portion 28 with a tolerance t, which may be +0.0 to +0.5mm, preferably +0.0 to +0.2mm.

FIG. 5 shows the screw 10 viewed from the tip 13 end. As shown, the head 11 of the screw 10 has a step 17 defining an annular recess 50, in which six radial ribs 21 are disposed and extend towards the shank 12.

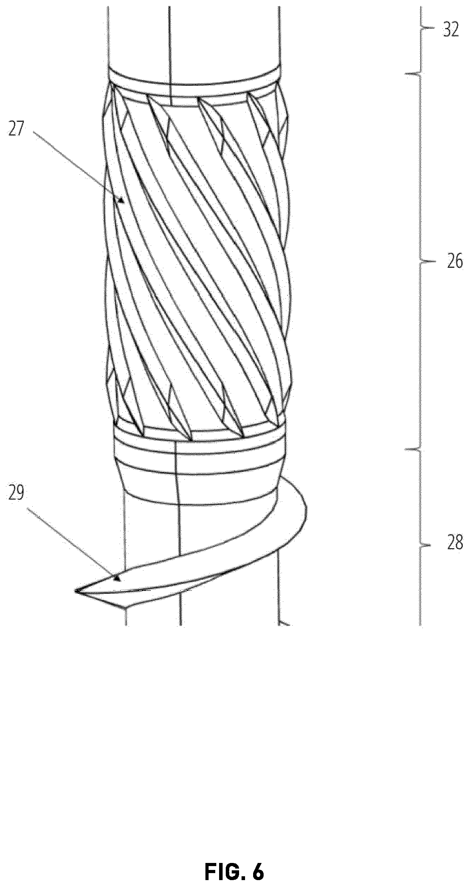

FIG. 6 shows the first portion 26 of the shank 12 at a central region which is between the second portion 28 and the third portion 32. The first portion 26 is provided with a first thread 27. The first thread 27 turns right towards the tip 13, when the screw 10 is viewed with the head 11 up. As such, the first thread 27 and the second thread 29 are orientated in opposing turning directions from one another.

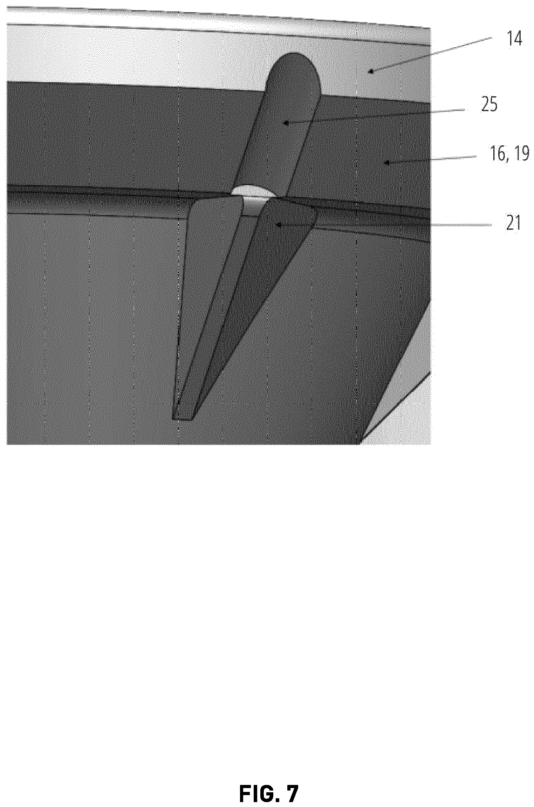

FIG. 7 shows a portion of the screw head 11. In this example, the head 11 of the screw is provided with at least one axial notch 25, which is U-shaped. The, or each, notch 25 extends at least partially along the top portion 14. In other examples, the, or each, notch 25 extends at least partially along the first frustoconical part 19. The notches 25 are axially aligned with the respective ribs 21. The notches 25 facilitate the passage of fluids such as air and/or oil.

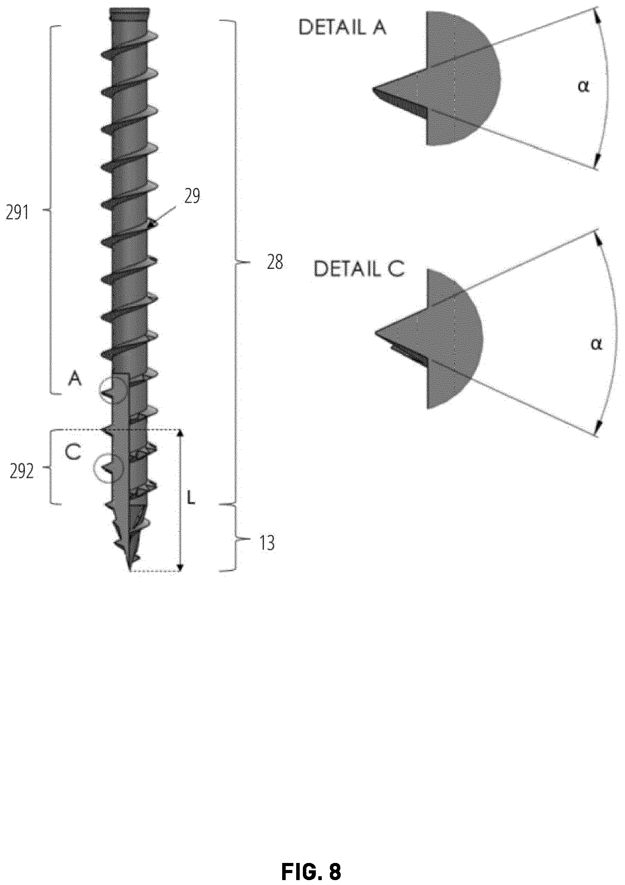

The second thread (i.e. main screw thread) 29 will now be described in more detail with reference to FIG. 8. The second thread 29 has a first part 291 proximal the head 11 and a second part 292 between the first part 291 and the tip 13. The second thread 29 has a thread angle α that is larger at the first part 291 than at the second part 292. In some examples, the thread angle α is constant along the first part 291. In some examples, the thread angle α is constant along the second part 292. In some examples, the thread angle α may increase from the first part 291 of the second thread 29 to the second part 292 of the second thread 29. The thread angle α may continuously and regularly increase from the first part 291 to the second part 292. For example, the thread angle α may increase by approximately 10 degrees from the first part 291 to the second part 292. The thread angle α may be equal at the second part 292 and at the tip 13. In this example, the combined length L of the second part 292 and the tip 13 along the axis of the screw 10 is equal to at least twice the diameter of the second portion 28. In particular, the length L may be equal to two to four times the diameter of the second portion 28.

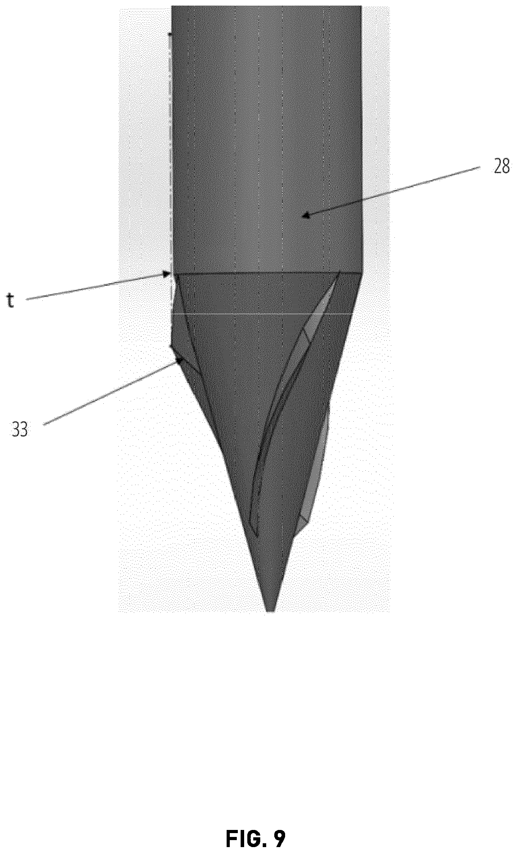

FIG. 9 shows an enlarged view of the screw tip 13, illustrating drilling threads 33 having a diameter which is substantially the same as the diameter t of the second portion 28.

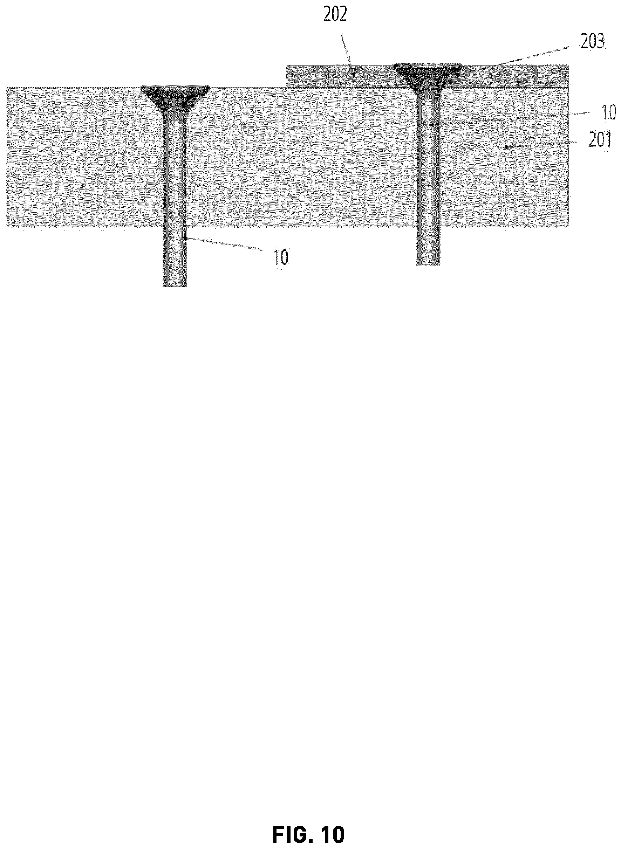

FIG. 10 illustrates the screw 10 during use for fastening a metal bracket 202 to a wooden part 201. It is envisaged that the screw 10 may be used to fasten other parts together, for example two or more wooden parts, or two or more metal parts. As shown, the metal bracket 202 has a hole 203 that is arranged to receive a countersunk screw. To fixate the metal bracket 202 to a wooden part 201, the metal bracket 202 is placed on top of a wooden part 201, and the screw 10 is inserted firstly through the metal bracket 202 and subsequently into the wooden part 201 from the tip 13 end. When the screw 10 is fully inserted, the head 11 of the screw 10 is received within the hole 203 of the metal bracket 202, which prevents the head 11 of the screw 10 from being inserted further into the metal bracket 202. When the screw 10 is inserted, the ribs 21 engage with the metal bracket 202 and the head 11 of the screw 10 rests in the part of the bracket 202 that is countersunk by 90 degrees. However, the ribs 21 are prevented from milling into the bracket 202 due to the shape of the frustoconical portion 16. In particular, the first frustoconical part 19 shields the ribs 21 against milling the bracket 202. As such, the screw 10 is provided with improved engagement and pull-out resistance through the ribs, and the ribs 21 are prevented from milling into the part to be fixated upon insertion and rotation.

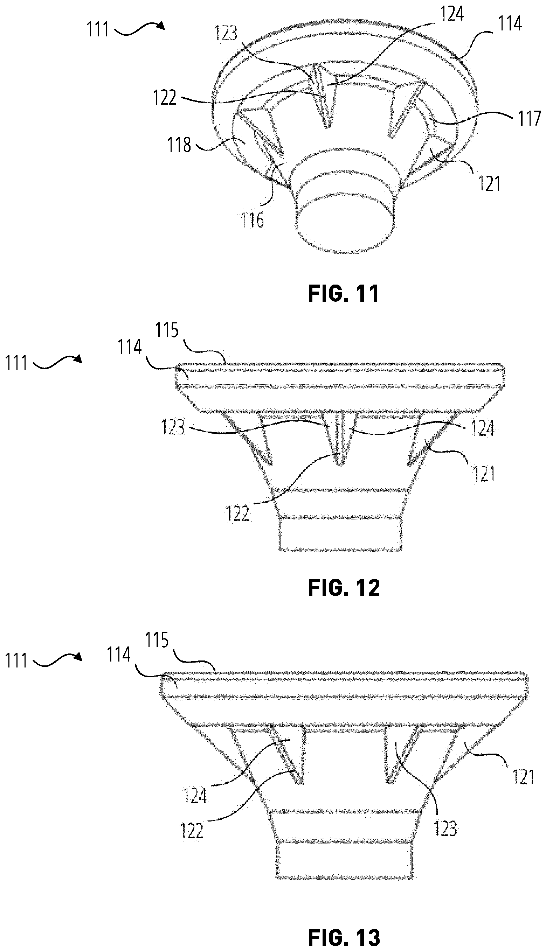

FIG. 11, FIG. 12 and FIG. 13 shows another example of a screw head 111. The screw head 111 differs from the screw head 11 of FIG. 2 and FIG. 3 in that the ribs 121 are symmetrical with respect to an axial plane containing their axial edge 122. Thus, the size of the first face 123 and the size of the second face 124 of the ribs 121 are the same. This is in contrast with the asymmetrical arrangement of the ribs 21 in FIG. 2 and FIG. 3.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A screw, comprising a head and a tip at opposite ends, and a shank extending between the head and the tip, the head comprising:
a top portion, and a frustoconical portion arranged between the top portion and the shank, wherein the frustoconical portion comprises a step defining an annular recess towards the shank; and
at least one radial rib arranged in the recess and extending towards the shank.

2. A screw of claim 1, wherein the frustoconical portion comprises a circumferential surface facing the shank and the tip.

3. A screw of claim 2, wherein the circumferential surface is arranged substantially perpendicular to an axis of the screw.

4. A screw of any one of claims 1 to 3, wherein the step segments the frustoconical portion into a first frustoconical part extending from the top portion to the step, and a second frustoconical part extending from the step towards the shank.

5. A screw of claim 4, wherein a diameter of the first frustoconical part is greater than a diameter of the second frustoconical part.

6. A screw of any one of claims 1 to 5, wherein the head of the screw comprises a plurality of ribs evenly distributed around the head.

7. A screw of any one of claims 1 to 6, wherein the, or each, rib has a radial dimension that decreases towards the shank.

8. A screw of any one of claims 1 to 7, wherein the, or each, rib comprises an axial edge, the, or each, rib being symmetrical with respect to an axial plane containing the axial edge.

9. A screw of any one of claims 1 to 8, wherein the shank comprises a first portion having a first thread, and a second portion between the first portion and the tip, the second portion having a second thread.

10. A screw of claim 9, wherein the first thread and the second thread are orientated in opposing turning directions.

11. A screw of claim 9 or 10, wherein the second thread has a thread angle that is larger than a thread angle of the first thread.

12. A screw of any one of claims 1 to 11, wherein the shank comprises a thread comprising a first part, and a second part arranged between the first part and the tip.

13. A screw of claim 12, wherein a thread angle of the thread increases continuously from the first part to the second part.

14. A screw of claim 12, wherein a thread angle of the thread is constant along the first part and/or the second part.

15. A screw of any one of claims 12 to 14, wherein a length of the second part and the tip is at least twice the diameter of the shank, preferably between two and four times the diameter of the shank.
